(19) Europäisches Patentamt
European Patent Office
Office européen des brevets

(11) **EP 3 605 444 A1**

(12) **EUROPEAN PATENT APPLICATION**
published in accordance with Art. 153(4) EPC

(43) Date of publication:
**05.02.2020 Bulletin 2020/06**

(51) Int Cl.:
***G06Q 50/20*** (2012.01)

(21) Application number: **18776314.9**

(22) Date of filing: **18.01.2018**

(86) International application number:
**PCT/JP2018/001292**

(87) International publication number:
**WO 2018/179693 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **30.03.2017 JP 2017067359**

(71) Applicant: **Sony Corporation**
**Tokyo 108-0075 (JP)**

(72) Inventors:
• **LAWRENSON, Matthew**
**Lausanne 1015 (CH)**
• **ISOZU, Masaaki**
**Tokyo 141-0031 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE AND INFORMATION PROCESSING METHOD**

(57) There is provided an information processing apparatus including a processor that certifies a first learning unit of a learner on the basis of information indicating knowledge of an educator who educates the learner and a predetermined condition.

*FIG. 4*

**Description**

TECHNICAL FIELD

The present disclosure relates to an information processing apparatus, and a method for processing information.

BACKGROUND ART

Conventionally, it is common for learners who receive education to receive education from educators (e.g., schoolteachers) who have more knowledge than learners. Accordingly, acquisition levels of learning of the learners change depending on from what sort of educators the learners have learned, whereby information associated with an educator and information associated with a learner are important in learning.

Patent Document 1 discloses a system using information associated with an educator and information associated with a learner. In the system disclosed in Patent Document 1, an educator suitable for a learner is selected on the basis of the information associated with an educator and the information associated with a learner.

CITATION LIST

PATENT DOCUMENT

Patent Document 1: US Patent Application Laid-Open No. 2002/0013836

SUMMARY OF THE INVENTION

PROBLEMS TO BE SOLVED BY THE INVENTION

However, the system disclosed in Patent Document 1 does not disclose evaluation of propagation of knowledge from the educator to the learner when the learner has learnt from the educator.

In view of the above, the present disclosure proposes information processing apparatus and a method for processing information capable of evaluating propagation of knowledge from educators to learners when the learners have learnt from the educators.

SOLUTIONS TO PROBLEMS

According to the present disclosure, there is provided an information processing apparatus including a processor that certifies a first learning unit of a learner on the basis of information indicating knowledge of an educator who educates the learner and a predetermined condition.

Furthermore, according to the present disclosure, there is provided a method for processing information that causes a computer to certify the first learning unit of the learner on the basis of the information indicating knowledge of the educator who educates the learner and a predetermined condition.

EFFECTS OF THE INVENTION

According to the present disclosure, propagation of knowledge from educators to learners when the learners have learnt from the educators is evaluated.

Note that the effect described above is not necessarily limited, and any of the effects described in the present specification or another effect that can be understood from the present specification may be exerted in addition to the effect described above or instead of the effect described above.

BRIEF DESCRIPTION OF DRAWINGS

Fig. 1 is a diagram schematically illustrating a blockchain system according to an embodiment of the present disclosure.
Fig. 2 is another diagram schematically illustrating the blockchain system according to the embodiment of the present disclosure.
Fig. 3 is still another diagram schematically illustrating the blockchain system according to the embodiment of the present disclosure.

Fig. 4 is a diagram schematically illustrating a configuration of a learning management system according to the embodiment of the present disclosure.

Fig. 5 is a diagram illustrating an exemplary relationship diagram generated on the basis of information managed in the learning management system according to the embodiment of the present disclosure.

Fig. 6 is a block diagram illustrating an exemplary functional configuration of a learning detection apparatus according to the embodiment of the present disclosure.

Fig. 7 is a block diagram illustrating an exemplary functional configuration of a server according to the embodiment of the present disclosure.

Fig. 8 is a flowchart illustrating an exemplary method for processing information according to the embodiment of the present disclosure.

Fig. 9 is a table illustrating exemplary information managed by a blockchain system according to the embodiment of the present disclosure.

Fig. 10 is a diagram illustrating another exemplary configuration of the learning management system according to the embodiment of the present disclosure.

Fig. 11 is a block diagram illustrating an exemplary functional configuration of a connected device according to the embodiment of the present disclosure.

Fig. 12 is a diagram illustrating an exemplary hardware configuration of the learning detection apparatus according to the embodiment of the present disclosure.

Fig. 13 is a diagram illustrating an exemplary hardware configuration of a server according to the embodiment of the present disclosure.

MODE FOR CARRYING OUT THE INVENTION

Hereinafter, a preferred embodiment of the present disclosure will be described in detail with reference to the accompanying drawings. Note that, in the present specification and the drawings, constituent elements having substantially the same functional configuration will be denoted by the same reference signs, and duplicate descriptions thereof will be omitted.

Note that descriptions will be given in the following order.

0. Overview of Peer-to-Peer Database
1. Overview of Learning Management System
2. Configuration of Devices Included in Learning Management System
3. Method for Processing Information in Learning Management System
4. Method for Processing Information using Evaluation Information from Connected Device
5. Hardware Configuration of Each Device
6. Supplementary Items
7. Conclusion

<0. Overview of Peer-to-Peer Database>

A learning management system according to the present embodiment uses a distributed peer-to-peer database distributed in a peer-to-peer network. Note that the peer-to-peer network may be called a peer-to-peer distributed file system. Hereinafter, the peer-to-peer network may be referred to as a "P2P network", and the peer-to-peer database may be referred to as a "P2P database". As an example of the P2P database, blockchain data distributed in the P2P network may be used. In view of the above, a blockchain system will be described first.

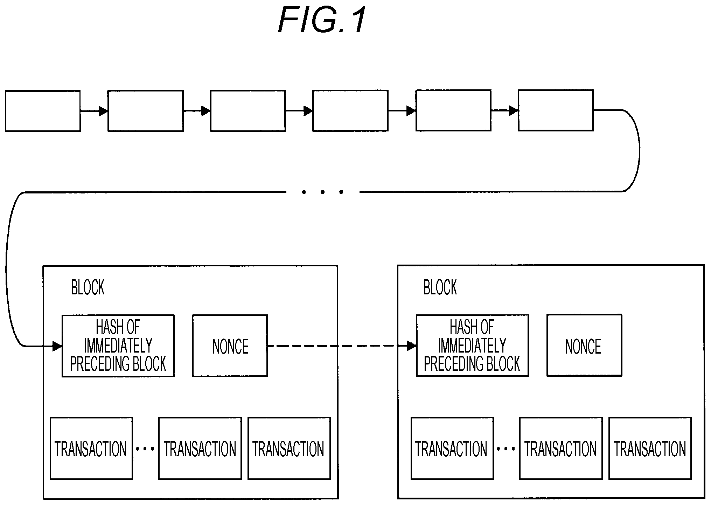

As illustrated in Fig. 1, blockchain data according to the present embodiment is data including a plurality of blocks continuously arranged in chains. One or more target data can be stored in each block as a transaction.

Examples of the blockchain data according to the present embodiment include blockchain data used for exchange of data of virtual currency, such as Bitcoin. The blockchain data used for exchange of data of virtual currency includes, for example, a hash of the immediately preceding block, and a special value called a nonce. The hash of the immediately preceding block is used to determine whether or not it is a "correct block" in a correct sequence from the immediately preceding block. A nonce is used to prevent impersonation in authentication using a hash, and tampering is prevented by using the nonce. Examples of the nonce include data indicating a character string, a numerical string, or a combination thereof.

Furthermore, in the blockchain data, data of each transaction is subject to application of an electronic signature using an encryption key, or is encrypted using an encryption key. Furthermore, data of each transaction is published and shared across the entire P2P network. Note that, depending on the blockchain system, the same record may not necessarily be held in the entire P2P network.

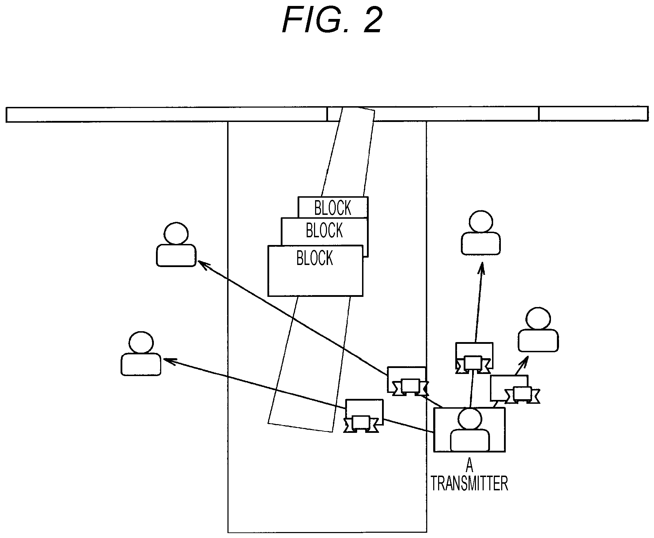

Fig. 2 is a diagram illustrating how target data is registered by a user A in the blockchain system. The user A electronically signs the target data to be registered in the blockchain data using a private key of the user A. Then, the user A broadcasts the transaction including the electronically signed target data on the network. This ensures that the owner of the target data is the user A.

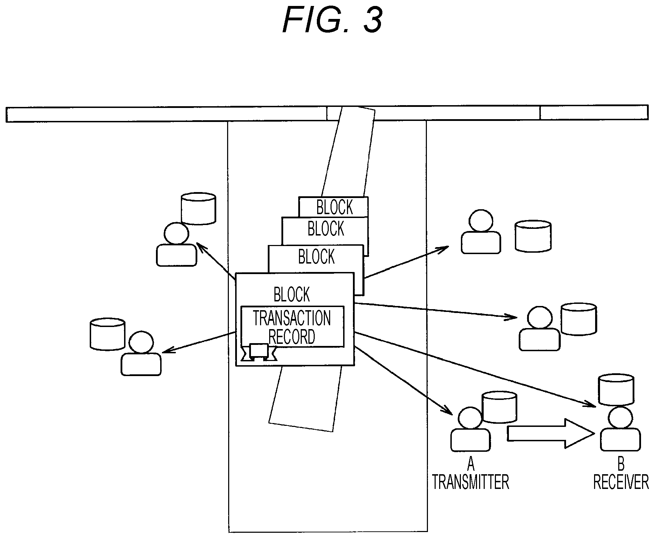

Fig. 3 is a diagram illustrating how the target data is migrated from the user A to a user B in the blockchain system. The user A electronically signs the transaction using the private key of the user A, and includes a public key of the user B in the transaction. This indicates that the target data has been migrated from the user A to the user B. Furthermore, upon the transaction of the target data, the user B may obtain a public key of the user A from the user A, and may obtain the electronically signed or encrypted target data.

Furthermore, in the blockchain system, by using a side chain technique, for example, it is possible to include, in the blockchain data used to exchange data of existing virtual currency such as the blockchain data of Bitcoin, other target data different from the virtual currency. Here, other target data different from the virtual currency in the present embodiment is information associated with a learning unit.

In this manner, with the blockchain data being used to manage the information associated with a learning unit, the information associated with a learning unit is held on the network without being tampered. Furthermore, with the blockchain data being used, a third party who wishes to use the information included in the blockchain can access the information included in the blockchain on the basis of predetermined authority. Note that the information associated with a learning unit managed in the present embodiment will be described later.

<1. Overview of Learning Management System>

The foregoing has described the blockchain system used in the learning management system according to the embodiment of the present disclosure. Hereinafter, an overview of the learning management system according to the embodiment of the present disclosure will be described.

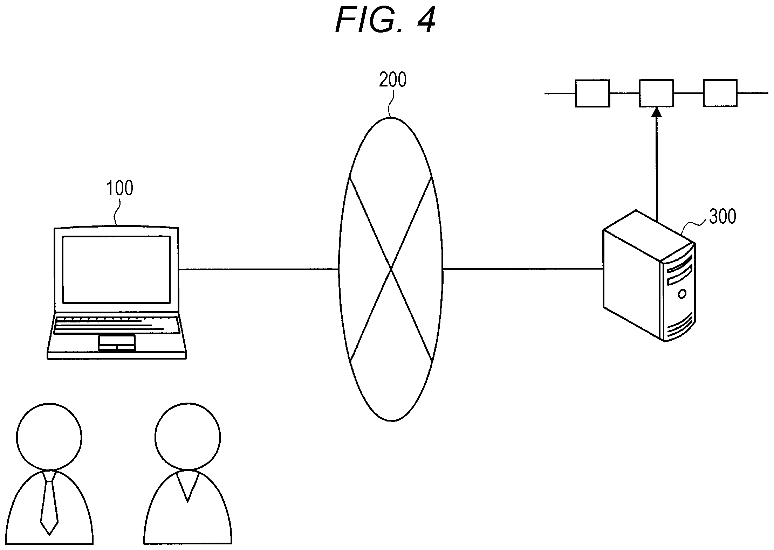

Fig. 4 is a diagram illustrating a configuration of the learning management system according to the present embodiment. The learning management system according to the present embodiment includes a learning detection apparatus 100, a network 200, and a server 300. Note that the learning detection apparatus 100 and the server 300 are an example of an information processing apparatus that executes information processing according to the present embodiment.

The learning detection apparatus 100 is an apparatus that obtains information associated with a learning event performed by a learner (hereinafter also referred to as a user). Here, the learning event indicates that the user is educated by an educator, for example. Specifically, the learning event includes viewing of a video of a lecture, participation in a lecture, a conversation between the user and the educator, and the like.

Then, the user may register the information associated with a learning event using the learning detection apparatus 100. For example, the user may register information associated with an educator, information associated with a learner, information associated with a learning method, information associated with a topic, and the like in the learning event.

Here, the information associated with an educator may include an ID of the educator, a name of the educator, and information associated with knowledge of the educator to be described later. Furthermore, the information associated with a learner may include an ID of the learner, a name of the learner, and information associated with knowledge of the learner to be described later. Furthermore, the information associated with a learning method may include participation in a lecture, viewing of a video, a practical skill, one-to-one tutoring, and the like. Note that, since the learning method is also considered to be a method by which the educator propagates knowledge to the learner, the learning method may be called a method of knowledge propagation.

Furthermore, the information associated with a topic includes information associated with a subject performed in the learning event. For example, topics may include foreign languages, mathematics, chemistry, physics, earth science, history, programming, cooking, engine control, mechanical engineering, meteorology, astronomy, animation, and the like. Note that the topics are obviously not limited to the examples mentioned above.

Furthermore, the learning detection apparatus 100 may obtain learning information that is the content learned in the learning event. The learning information includes information associated with the content used in the learning event, and data obtained in the learning event. For example, the learning information may include text data of a textbook used in the learning event, and image data or audio data of a video. Furthermore, the learning information may also include audio data of a conversation between the educator and the learner at the learning event.

Accordingly, as illustrated in Fig. 4, the learning detection apparatus 100 may detect audio data of a conversation between the user and the educator taking place around the learning detection apparatus 100. In Fig. 4, the user is educated by the educator, and the learning detection apparatus 100 may obtain audio data obtained from a microphone included in the learning detection apparatus 100.

Then, the learning detection apparatus 100 transmits, to the server 300, the information associated with a learning event, and the learning information of the learning event. As described above, the information associated with a learning event may include the information associated with an educator, the information associated with a learner, the information associated with a learning method, the information associated with a topic, and the like. Furthermore, the learning information of the learning event may include text data of the textbook used in the learning event, and image data or audio data of the video.

The server 300 receives, from the learning detection apparatus 100, the information associated with a learning event and the learning information of the learning event, and performs processing on the received information. Specifically, the server 300 analyzes the received learning information. For example, the server 300 may analyze the learning information using a vector space model to determine whether or not it has relevance with a registered topic. Furthermore, the server 300 may analyze a file header of the content used in the learning event to determine relevance to the topic.

For example, the server 300 may obtain identification information (e.g., file creator, file name) associated with each file from the header, and may determine the relevance to the topic on the basis of the identification information. That is, in a case where the identification information included in the header indicates an English textbook, relevance to an English topic may be determined.

Furthermore, the server 300 performs processing associated with certification of the learning unit on the basis of the information received from the learning detection apparatus 100. Note that, the learning management system according to the present embodiment manages an official learning unit (second learning unit) that is a learning unit certified on the basis of a curriculum or a syllabus managed by a predetermined institution, and a shared learning unit (first learning unit) that is an informal learning unit not managed by a predetermined institution such as a school. That is, the shared learning unit is a learning unit certified by propagation of knowledge based on informal learning not managed by a predetermined institution such as a school.

For example, the official learning unit may be certified on the basis of attendance at a predetermined institution, such as a school.

Furthermore, the shared learning unit may be certified on the basis of private education given from the educator having the official learning unit or the shared learning unit to the user. Specifically, the shared learning unit includes a learning unit certified on the basis of a seminar that the user has privately applied for. Furthermore, the shared learning unit includes a learning unit certified on the basis of a conversation that has been privately conducted between the user and the educator.

The server 300 performs processing associated with certification of the shared learning unit on the basis of the information associated with a learning event described above. For example, the server 300 performs the processing associated with certification of the shared learning unit on the basis of the information associated with knowledge of the educator and the information associated with knowledge of the learner. Note that the certifying process of the shared learning unit will be described later.

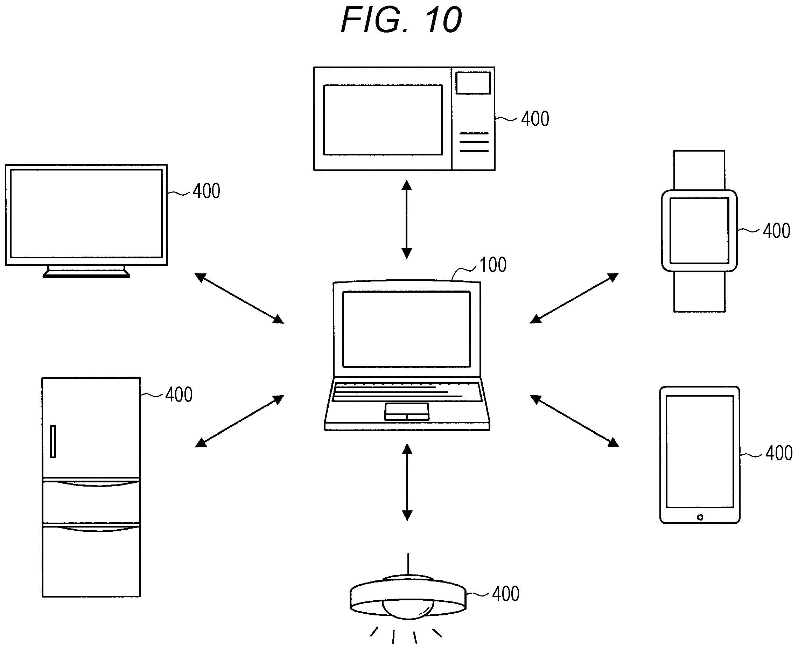

Furthermore, the server 300 may perform the processing associated with certification of the shared learning unit on the basis of information from a device to be connected to the learning detection apparatus 100. For example, the server 300 may perform the processing associated with certification of the shared learning unit using various kinds of information obtained from the connected device. The information obtained from the connected device may include, for example, information associated with actions of the user, biological information of the user, information associated with a usage status of the connected device, and the like. Note that an exemplary case where the connected device is used will be described later with reference to Fig. 10.

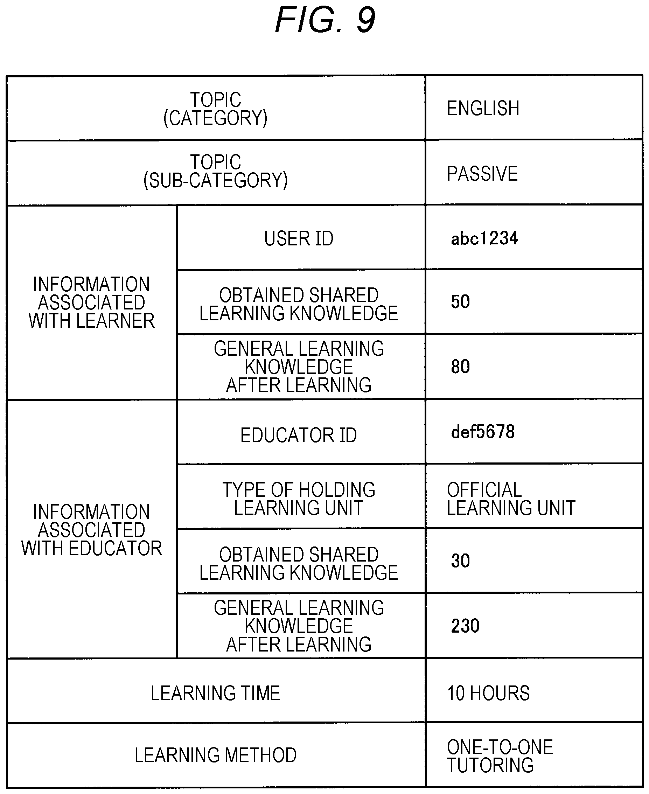

Then, the server 300 registers the information associated with the shared learning unit that has been certified in the blockchain that is an example of the P2P database. Here, the information associated with the shared learning unit to be registered in the blockchain may include, as will be described later with reference to Fig. 9, information associated with a topic, information associated with a learner, information associated with an educator, information associated with a learning time, information associated with a learning method, and the like.

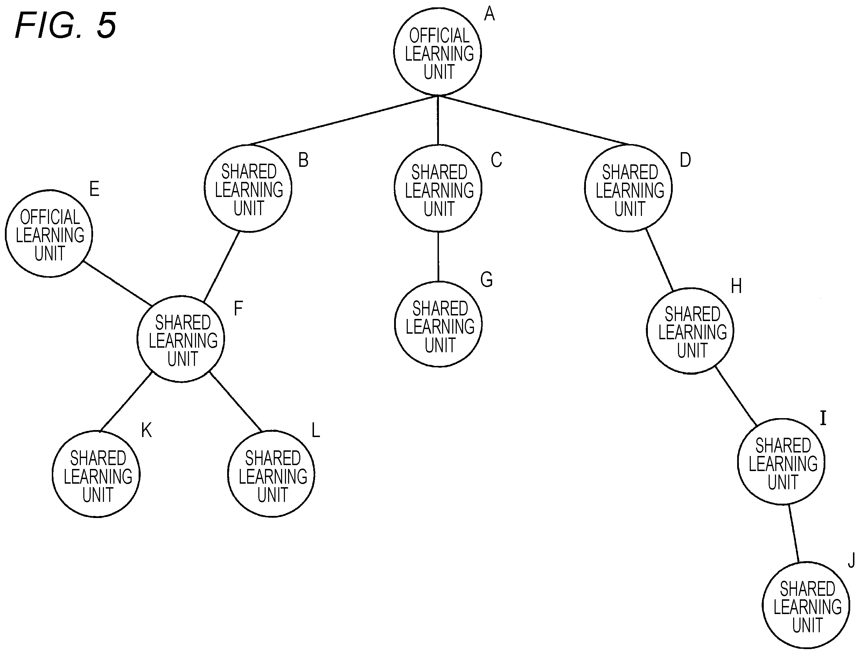

Fig. 5 illustrates a relationship diagram generated on the basis of information managed by the blockchain in the learning management system according to the present embodiment. The "official learning unit" in Fig. 5 indicates the above-described learning unit certified on the basis of a curriculum or a syllabus managed by a predetermined institution. Furthermore, in Fig. 5, the "shared learning unit" indicates the above-described learning unit based on education from the educator, which is not managed by a predetermined institution. Furthermore, in Fig. 5, an alphabetic character shown in the upper right of the "official learning unit" or the "shared learning unit" indicates a user who has received certification of the "official learning unit" or the "shared learning unit".

In Fig. 5, the user A has received certification of the official learning unit from a predetermined institution. In addition, it is indicated that users B, C, and D have been educated by the user A in a state of not being managed by a predetermined institution, and the shared learning unit has been certified on the basis of the education. Furthermore, in Fig. 5, it is indicated that the users B, C, and D have educated users F, G, and H, respectively, in a state of not being managed by a predetermined institution. In addition, in Fig. 5, it is indicated that the users F, G, and H have received certification of the shared learning unit on the basis of the education from the users B, C, and D.

As described above, in an information management system according to the present embodiment, propagation of knowledge from the educator to the learner is evaluated and managed. Furthermore, in the information management system according to the present embodiment, the information associated with a shared learning unit is managed, thereby managing informal education other than education provided by a predetermined institution, such as a school. Furthermore, in such informal education, information indicating what sort of education has been provided by what sort of educator is managed. Furthermore, with the information associated with a shared learning unit being registered in the blockchain, the information associated with a learning unit is held on the network without being tampered. Furthermore, a third party who wishes to use the information included in the blockchain can access the information included in the blockchain on the basis of predetermined authority.

<2. Configuration of Devices Included in Learning Management System>

The foregoing has described the overview of the learning management system according to the embodiment of the present disclosure. Hereinafter, configurations of devices included in the learning management system according to the embodiment of the present disclosure will be described.

(2-1. Configuration of Learning Detection Apparatus 100)

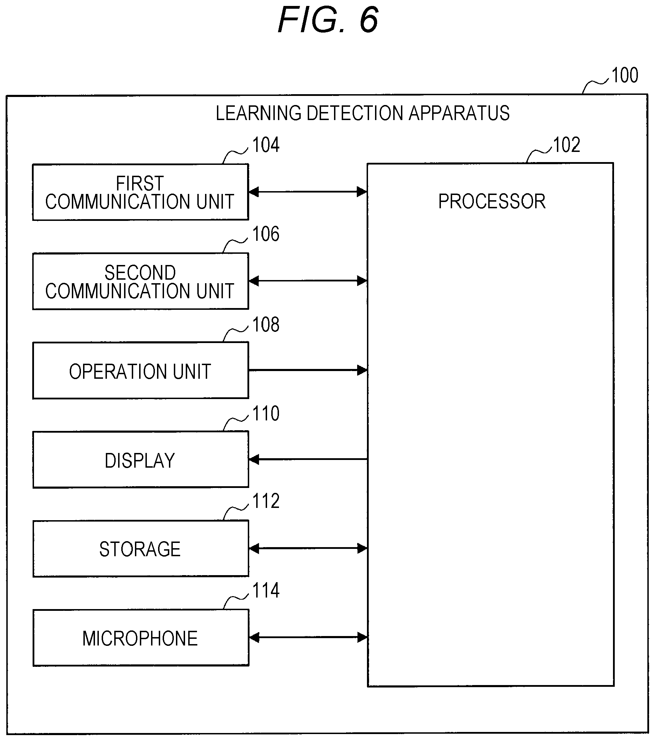

Fig. 6 is a diagram illustrating an exemplary configuration of the learning detection apparatus 100 according to the present embodiment. The learning detection apparatus 100 includes, for example, a processor 102, a first communication unit 104, a second communication unit 106, an operation unit 108, a display 110, a storage 112, and a microphone 114.

The processor 102 processes signals from each component of the learning detection apparatus 100. For example, the processor 102 decodes the signals transmitted from the first communication unit 104 or the second communication unit 106, and extracts data. In addition, the processor 102 may process signals from the operation unit 108 to issue an instruction directed to an application to be executed in the processor 102. In addition, the processor 102 may also read data from the storage 112 to perform processing on the read data. In addition, the processor 102 may also process data obtained from the microphone 114.

The first communication unit 104 is a communication unit that communicates with an external device by wired communication or wireless communication, which may perform communication using, for example, a communication scheme in conformity with Ethernet (registered trademark). Furthermore, the first communication unit 104 may perform communication using a communication scheme defined by the third generation partnership project (3GPP) or 3GPP2. Specifically, the first communication unit 104 may perform communication using a communication scheme such as W-CDMA, long term evolution (LTE), and CDMA2000. Note that the communication schemes mentioned above are examples, and the communication scheme of the first communication unit 104 is not limited thereto.

The second communication unit 106 is a communication unit that communicates with an external device by near field communication, which may perform communication using, for example, a communication scheme (e.g., Bluetooth (registered trademark)) defined by the IEEE802 committee. In addition, the second communication unit 106 may perform communication using a communication scheme such as Wi-Fi. Note that the communication schemes mentioned above are examples, and the communication scheme of the second communication unit 106 is not limited thereto.

The operation unit 108 receives operation on the learning detection apparatus 100 made by the user. The user operates the operation unit 108 to operate the application executed by the learning detection apparatus 100, for example. In addition, the user operates the operation unit 108 to set various functions of the learning detection apparatus 100. For example, the user may register the information associated with a learning event using the operation unit 108.

The display 110 is used to display an image. For example, the display 110 displays an image associated with the application executed by the learning detection apparatus 100. Furthermore, the display 110 may display content used for a learning event. For example, the display 110 may display an electronic book stored in the storage 112. The storage 112 stores programs, such as an application to be executed by the learning detection apparatus 100, and an operating system. In addition, the storage 112 may also store content used for a learning event. For example, the storage 112 may store text data related to a textbook, or image data related to a lecture. The microphone 114 obtains audio data from sounds around the learning detection apparatus 100.

(2-2. Configuration of Server 300)

The foregoing has described the configuration of the learning detection apparatus 100 according to the embodiment of the present disclosure. Hereinafter, a configuration of the server 300 according to the embodiment of the present disclosure will be described.

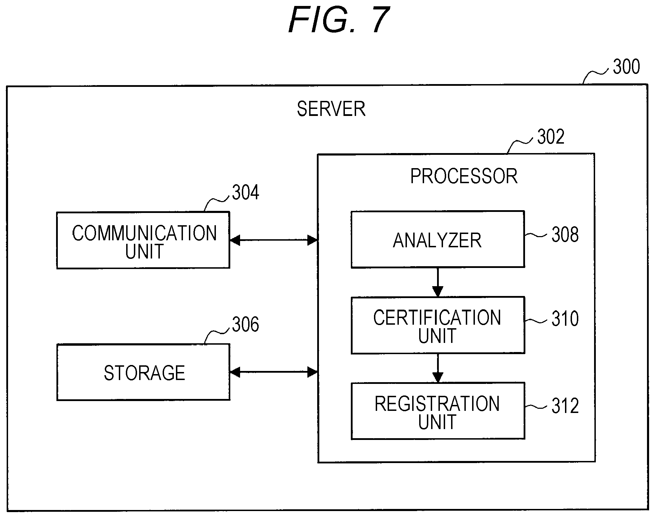

Fig. 7 is a diagram illustrating an exemplary configuration of the server 300 capable of performing a process according to a method for processing information of the present embodiment. The server 300 includes, for example, a processor 302, a communication unit 304, and a storage 306. The processor 302 further includes an analyzer 308, a certification unit 310, and a registration unit 312.

The processor 302 processes signals from each component of the server 300. For example, the processor 302 decodes the signals transmitted from the communication unit 304, and extracts data. In addition, the processor 302 reads data from the storage 306 to perform processing on the read data.

The analyzer 308 analyzes learning information. For example, the analyzer 308 analyzes text data using the vector space model. The vector space model represents text data as vector data using the frequency of occurrence, the occurrence rate, or the like of words included in the text data. Furthermore, the analyzer 308 converts audio data into text data. Then, the analyzer 308 converts the text data based on the audio data into vector data.

The certification unit 310 determines whether or not the learning performed by the user has relevance with a predetermined topic. For example, in a case where the topic is the passive in English, the certification unit 310 determines, using the vector data generated by the analyzer 308, whether or not the learning performed by the user is related to the passive in English.

Furthermore, the certification unit 310 certifies the shared learning unit on the basis of, for example, information indicating knowledge of the educator and information indicating knowledge of the learner in the determined topic. Here, the information indicating knowledge of the educator and the information indicating knowledge of the learner may be stored in the storage 306, or may registered in the blockchain. In a case where the information indicating knowledge of the educator and the information indicating knowledge of the learner are obtained from the blockchain, the certification unit 310 may obtain, via the communication unit 304, the information indicating knowledge of the educator and the information indicating knowledge of the learner from the blockchain. The process associated with certification of the shared learning unit performed by the certification unit 310 will be described later.

The registration unit 312 registers the information associated with the shared learning unit that has been certified in the blockchain. The information associated with the shared learning unit includes, for example, any one of the information associated with a topic, information associated with an educator, information associated with a learner, information associated with a learning time, and information associated with a learning method. The information associated with the shared learning unit to be registered in the blockchain will be described later with reference to Fig. 9.

The communication unit 304 is a communication unit that communicates with an external device by wired communication or wireless communication, which may perform communication using, for example, a communication scheme in conformity with Ethernet (registered trademark). The storage 306 stores various kinds of data used by the processor 302.

<3. Method for Processing Information in Learning Management System>

The foregoing has described the configuration of each of the devices included in the learning management system according to the embodiment of the present disclosure. Hereinafter, a method for processing information in the learning management system according to the embodiment of the present disclosure will be described.

(3-1. Exemplary Method for Processing Information Related to Certification of Shared Learning Unit)

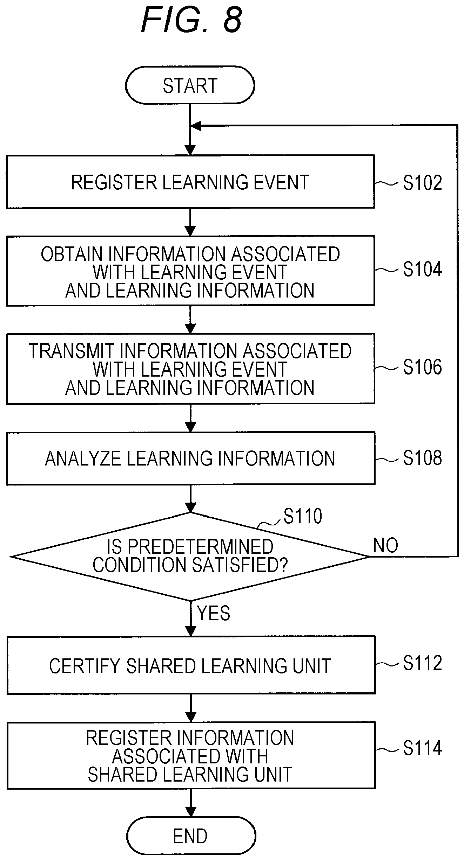

Fig. 8 is a flowchart illustrating an exemplary method for processing information executed in the learning management system according to the present embodiment. In particular, Fig. 8 illustrates an exemplary method for processing information related to certification of a shared learning unit.

In S102, the user registers a learning event using the learning detection apparatus 100. For example, the user may select viewing of a video of a lecture included in a predetermined list, and may register the viewing of the video of the lecture as a learning event. For example, the lecture may be a lecture regarding the passive in English. Furthermore, the user may select an educator included in a predetermined list, and may take one-to-one tutoring with the educator. At this time, the one-to-one tutoring is registered as a learning event. Furthermore, the user may select and register a topic related to the one-to-one tutoring. For example, the one-to-one tutoring may be performed in relation to the passive in English.

Next, in S104, the learning detection apparatus 100 obtains the information associated with a learning event, and the learning information. In a case where the learning event is the viewing of the video of the lecture, information associated with the educator of the lecture is obtained as the information associated with the learning event. Furthermore, information associated with the user is obtained as the information associated with a learner. Furthermore, video viewing is obtained as the information associated with a learning method. Furthermore, the passive in English is obtained as the information associated with a topic. Furthermore, animation data reproduced in the lecture is obtained as the learning information in the learning event.

Furthermore, in a case where the learning event is the one-to-one tutoring, information associated with the selected educator is obtained as the information associated with the learning event. Furthermore, information associated with the user is obtained as the information associated with a learner. Furthermore, one-to-one tutoring is obtained as the information associated with a learning method. Furthermore, the passive in English is obtained as the information associated with a topic. Furthermore, audio data of the user and the educator in the one-to-one tutoring is obtained by the learning detection apparatus 100. Then, the obtained audio data is obtained as the learning information in the learning event. Note that the audio data may be obtained by the microphone 114 included in the learning detection apparatus 100.

In S106, for example, when the learning event has ended, the learning detection apparatus 100 transmits the obtained information associated with the learning event and the learning information to the server 300. The end of the learning event may be determined on the basis of, for example, the end of playback of the video. Furthermore, the end of the learning event may be determined on the basis of the fact that no sound has been detected for a predetermined period of time.

In S108, the analyzer 308 analyzes the obtained learning information. For example, the analyzer 308 converts the obtained text data into vector data using the vector space model. Furthermore, the analyzer 308 converts the obtained audio data into text data, and converts the converted text data into vector data.

Then, in S110, the certification unit 310 makes determination on a predetermined condition for certifying the shared learning unit described above. For example, the predetermined condition may be that the learning performed by the user has relevance with a registered topic.

Therefore, the certification unit 310 determines whether or not the learning information obtained in S104 has relevance with the registered topic. For example, in a case where the topic is the passive in English as described above, the certification unit 310 determines, using the vector data, whether or not the obtained learning information is related to the passive in English. That is, it is determined whether or not the learning performed between the educator and the user is related to the topic (the passive in English). Therefore, for example, in a case where a conversation with no relevance with the topic is being conducted between the educator and the user, the certification unit 310 determines that the learning performed between the educator and the user has no relevance with the registered topic. Furthermore, in a case where the user is viewing a video with no relevance with the topic, the certification unit 310 determines that the learning performed by the user has no relevance with the registered topic. In this manner, it is determined whether or not the user is learning properly.

Furthermore, the predetermined condition may be that a certain amount of learning has been performed. Therefore, the certification unit 310 determines, for example, whether or not the video of the lecture has been viewed for a predetermined period of time (e.g., one hour). Furthermore, the certification unit 310 may determine whether or not a certain amount of conversation has been conducted between the educator and the learner. Note that the fact that the certain amount of learning has been performed may be determined using the vector data generated by the analyzer 308. In this manner, it is determined whether or not the user is learning properly.

Furthermore, the predetermined condition may be a condition regarding knowledge of the educator and knowledge of the learner. In that case, the predetermined condition may be determined on the basis of the obtained information associated with the educator and the information associated with the learner.

Specifically, the information associated with the educator obtained in S104 includes the information associated with knowledge of the educator on a predetermined topic (in the exemplary case described above, the passive in English). Furthermore, the information associated with the learner obtained in S104 includes the information associated with knowledge of the learner on a predetermined topic (in the exemplary case described above, the passive in English).

More specifically, the information associated with knowledge of the educator includes information associated with formal learning knowledge, shared learning knowledge, and general learning knowledge. Furthermore, in a similar manner, the information associated with knowledge of the learner also includes information associated with formal learning knowledge, shared learning knowledge, and general learning knowledge.

Here, the formal learning knowledge indicates knowledge obtained from formal education designated by a predetermined institution. Furthermore, the shared learning knowledge indicates knowledge obtained from informal education not managed by a predetermined institution. The general learning knowledge indicates the sum of the formal learning knowledge and the shared learning knowledge. Note that, hereinafter, an exemplary case where the information associated with the formal learning knowledge, the shared learning knowledge, and the general learning knowledge is treated as information indicated by numerical values will be described.

Under the premise described above, the predetermined condition may be that the following formula 1 is satisfied.

```
TLE [Educator, Topic] > Educational Knowledge Threshold
Value ...(1)
```

Here, TLE [Educator, Topic] represents a value of the general learning knowledge of the educator in a predetermined topic. The formula 1 mentioned above is used to determine that the educator in the learning event has the knowledge to be qualified as an educator of the predetermined topic. This prevents the learning unit from being certified on the basis of education from a person who is ineligible to be an educator. Note that the general learning knowledge is used in the formula 1 mentioned above. However, the formal learning knowledge of the educator may be used to determine the knowledge to be qualified as an educator. That is, the formal learning knowledge of the educator may be compared with the educational knowledge threshold value. Furthermore, different educational threshold values may be set for each of the general learning knowledge and the formal learning knowledge of the educator, and the educational knowledge threshold values corresponding to the respective general learning knowledge and formal learning knowledge may be compared.

Furthermore, the predetermined condition may be that the following formula 2 is satisfied.

$$\text{TLE [Educator, Topic]} - \text{General Learning Knowledge [Learner, Topic]} > \text{Knowledge Difference Threshold Value} \quad \ldots (2)$$

Here, TLE [Learner, Topic] represents a value of the general learning knowledge of the learner in a predetermined topic. The formula 2 mentioned above is used to determine that the educator in the learning event has knowledge more copious than that of the learner in the predetermined topic. This prevents the learning unit from being certified on the basis of education from an educator whose knowledge difference with the learner is inappropriate. Note that the general learning knowledge is used in the formula 2 mentioned above. However, the formal learning knowledge of the educator and the learner may be used to determine that the educator has knowledge more copious than that of the learner. That is, the formal learning knowledge of the educator may be compared with the formal learning knowledge of the learner.

Furthermore, the predetermined condition may be that the following formula 3 is satisfied.

$$\text{TLE [Learner, Topic]} > \text{Learning Knowledge Threshold Value} \quad \ldots (3)$$

The formula 3 mentioned above is used to determine that the learner in the learning event has the knowledge for participating in the learning event. This prevents the learning unit from being certified in the case where the knowledge of the learner is not sufficient enough for a predetermined learning event (e.g., education at the university student level) (e.g., a case where the knowledge of the learner is at the elementary student level). Note that the general learning knowledge of the learner is used in the formula 2 mentioned above. However, the formal learning knowledge or the shared learning knowledge of the learner may be used to determine that the learner has the knowledge necessary for participating in the learning event. Furthermore, different learning knowledge threshold values may be set for each of the general learning knowledge, the formal learning knowledge, and the shared learning knowledge of the learner, and the learning knowledge threshold values corresponding to the respective general learning knowledge, formal learning knowledge, and shared learning knowledge may be compared.

Furthermore, the predetermined condition may be a condition based on the relationship in the relationship diagram illustrated in Fig. 5. For example, the predetermined condition may be based on education from an educator within a predetermined number of hops from an educator having the official learning unit. Here, as illustrated by lines in Fig. 5, the number of hops indicates that the shared learning unit is certified for a certain learner by being educated by a certain educator. That is, the number of hops indicates the number of times of knowledge propagation from the educator to the learner. Note that, in a case where the condition based on relationships in a relationship diagram as illustrated in Fig. 5 is used, the certification unit 310 may obtain information for generating the relationship diagram from a blockchain. For example, the certification unit 310 may obtain, among information to be described later with reference to Fig. 9, the information associated with the educator and the information associated with the learner from the blockchain.

For example, an exemplary case where the predetermined condition is based on education from an educator having the number of hops within two from an educator having the official learning unit will be described. In Fig. 5, in a case where a user J is educated by a user I, the number of hops of the user I from the user A, who is an educator having the official learning unit, is three, whereby the condition is unsatisfied. Meanwhile, in Fig. 5, in a case where the user G is educated by the user C, the number of hops of the user C from the user A, who is an educator having the official learning unit, is one, whereby the condition is satisfied.

Note that the knowledge propagation may be weighted by the certification unit 310 with respect to knowledge propagation for each user (each hop) in view of the fact that the amount of knowledge propagation decreases each time the propagation is repeated. For example, weighting may be carried out such that the number of hops increases on the basis of the number of people intervening between the educator having the official learning unit and the learner. Specifically, in Fig. 5, the number of hops between the user A and the user D may be smaller than the number of hops between the user D and the user H. Note that the number of people intervening between the user A having the official learning unit and the user D is zero, and the number of people intervening between the user A having the official learning unit and the user H is one. Furthermore, the number of hops between the user D and the user H may be larger than the number of hops between the user H and the user I. Note that the number of people intervening between the user A having the official learning unit and the user H is one, and the number of people intervening between the user A having the official learning unit and the user I is two.

More specifically, for example, in a case where the number of hops between the user A and the user D is virtually set to 1, the number of hops between the user D and the user H may be virtually set to 1.5. This is because the number of people intervening between the user A having the official learning unit and the user D is smaller than the number of people intervening between the user A having the official learning unit and the user H. Furthermore, in a case where the number of hops between the user D and the user H is virtually set to 1.5, the number of hops between the user H and the user I may be virtually set to 2. This is because the number of people intervening between the user A having the official learning unit and the user H is smaller than the number of people intervening between the user A having the official learning unit and the user I. Therefore, the total number of hops from the user A to the user I is 4.5.

Then, the predetermined condition may be determined on the basis of the number of hops having been subject to the weighting described above. Furthermore, the weighting for the number of hops may be set on the basis of the type of the learning event or the learning method. For example, in a case where the amount of knowledge propagation of video viewing is assumed to be smaller than that of one-to-one tutoring, the number of hops indicating knowledge propagation based on video viewing may be set to be larger than the number of hops indicating knowledge propagation based on one-to-one tutoring. Specifically, in a case where knowledge propagation from the user A to the user D is performed on the basis of video viewing in the relationship diagram in Fig. 5, the number of hops between the user A and the user D may be virtually set to two. Furthermore, in a case where knowledge propagation from the user D to the user H is performed on the basis of one-to-one tutoring, the number of hops between the user D and the user H may be virtually set to one. Therefore, the total number of hops from the user A to the user H is three. Note that, in that case, the certification unit 310 may obtain, among information to be described later with reference to Fig. 9, the information associated with the learning method from the blockchain.

Furthermore, the predetermined condition may be that the score of the score of an examination for measuring the degree of understanding of the user is equal to or more than a predetermined score. This prevents the unit from being certified even in the case where the user does not understand. Note that the examination mentioned above may be presented to the user by the server 300.

Note that the plurality of examples of the predetermined condition as described above may be combined and used for certification of the shared learning unit, or may be used alone for certification of the shared learning unit.

Referring back to Fig. 8, in a case where the certification unit 310 determines that the predetermined condition is satisfied in S110, the process proceeds to S112. In S112, the certification unit 310 certifies the shared learning unit for the user. Then, in S114, the registration unit 312 registers the information associated with the shared learning unit that has been certified in the blockchain.

Note that the shared learning knowledge described above may be added by the shared learning unit being certified. For example, predetermined shared learning knowledge to be added may be associated with the learning event. For example, 30 points of shared learning knowledge may be given to the learner in the learning event performed by video viewing. Furthermore, in the learning event performed by one-to-one tutoring, 30 points of shared learning knowledge may be given to the educator, and 50 points of shared learning knowledge may be given to the learner. Furthermore, the shared learning knowledge to be given may be variable corresponding to the amount of learning information. For example, in a case where the amount of conversation conducted between the educator and the learner is large, the shared learning knowledge may be given corresponding to the amount.

Furthermore, as the values of the general learning knowledge and the shared learning knowledge used in the formulae 1 to 3 mentioned above, values after the shared learning unit is certified may be used, or values before the shared learning unit is certified may be used.

(3-2. Exemplary Information Registered in Blockchain)

The foregoing has described the exemplary method for processing information related to certification of the shared learning unit. Hereinafter, exemplary information associated with a shared learning unit to be registered in a blockchain, which is an example of the P2P database, will be described.

Fig. 9 is a table illustrating exemplary information associated with a shared learning unit to be registered in a blockchain. In the learning management system according to the present embodiment, information associated with a shared learning unit as illustrated in Fig. 9 is registered in place of transaction information of an existing blockchain such as Bitcoin, or in association with transaction information of an existing blockchain such as Bitcoin.

As illustrated in Fig. 9, in the learning management system according to the present embodiment, for example, a topic (category and sub-category), information associated with a learner, information associated with an educator, a learning time, and a learning method may be registered in the blockchain. Furthermore, the information associated with a learner may include a user ID (learner ID), information associated with the obtained shared learning knowledge, and information associated with the general learning knowledge after learning. Furthermore, the information associated with an educator may include an educator ID, information associated with a type of the holding learning unit, information associated with the obtained shared learning knowledge, and information associated with the general learning knowledge after learning. Note that, although not illustrated in Fig. 9, the information associated with a learner and the information associated with an educator may include information associated with the formal learning knowledge.

Furthermore, information associated with the degree of understanding of the user may be registered in the blockchain. The degree of understanding may be determined on the basis of the score of an examination conducted on the user.

As described above, the information associated with the shared learning unit is managed by the blockchain data, whereby the shared learning unit certified for the user is managed in the state in which the information is not tampered and a third party can easily use the information.

<4. Method for Processing Information using Evaluation Information from Connected Device>

The foregoing has described the exemplary method for processing information related to certification of the shared learning unit. Hereinafter, another exemplary configuration of the learning management system according to the present embodiment will be described. In the present embodiment, as illustrated in Fig. 10, evaluation information obtained by a device 400 to be connected to the learning detection apparatus 100 is used for the determination in S110 of Fig. 8. The evaluation information obtained by such a connected device 400 is used to determine whether or not the learner is learning properly.

In the present embodiment, as illustrated in Fig. 10, the learning detection apparatus 100 is connected to the connected device 400, such as a television, a refrigerator, a ceiling light, a mobile phone, a wearable device, and a microwave. The connected device 400 includes a stationary device whose installation location is less likely to be changed, such as a television, a refrigerator, a ceiling light, and a microwave, and a portable device whose location is likely to be changed, such as a mobile phone, and a wearable device. Note that the learning detection apparatus 100 may be connected to the connected device 400 wirelessly or by wire.

The connected device 400 obtains, using a built-in sensor or the like, the evaluation information to be used for evaluating the learning of the user. The evaluation information obtained by the connected device 400 includes, for example, information associated with actions of the user, biological information of the user, information associated with a usage status of the connected device 400, and the like.

In a case where the connected device 400 is a portable device, the information associated with actions of the user may include location information. Furthermore, the information associated with actions of the user may also include information indicating an exercise state of the user (e.g., information indicating that the user is walking, running, or lying on a bed or the like). Note that the exercise state of the user may be determined by pattern matching being performed using the information obtained from the sensor.

Furthermore, the biological information of the user may include information associated with a heart rate, blood pressure, an amount of sweating, a body temperature, brain waves, and the like. Furthermore, the information associated with a usage status of the connected device 400 may include, for example, information indicating that the power of the connected device 400 is turned on/off, and that the door of the connected device 400 is opened. Furthermore, the information associated with a usage status of the connected device 400 may include information indicating that the connected device 400 is being operated.

The connected device 400 transmits the evaluation information described above to the learning detection apparatus 100, and the learning detection apparatus 100 further transmits the evaluation information to the server 300. Then, the certification unit 310 of the server 300 determines the predetermined condition in S110 of Fig. 8 on the basis of the evaluation information.

Here, the predetermined condition may be, for example, that the use of the connected device 400 is not detected, or that the operation on the connected device 400 is not detected. Furthermore, the predetermined condition may be that movement of the user is not detected, or that the user is not lying down.

As described above, in the learning management system according to the present embodiment, the learning of the learner is evaluated on the basis of the wide-ranging evaluation information obtained by the connected device 400. In this manner, the learning performed by the user is evaluated on the basis of the evaluation information obtained from the connected device 400, whereby the learning unit can be prevented from being certified for the user in the case where the user is not concentrating on the learning.

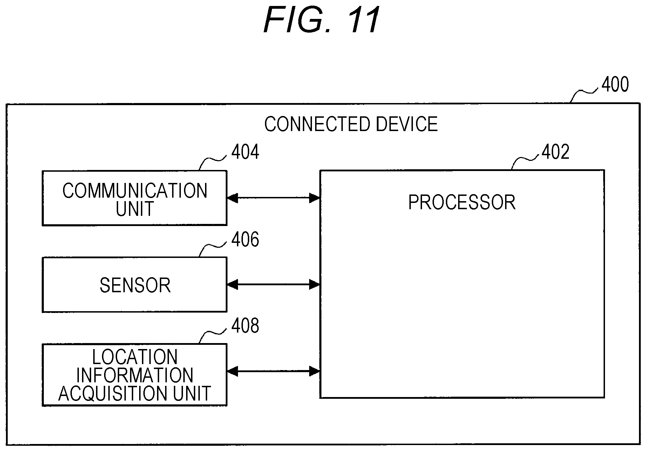

Fig. 11 is a diagram illustrating an exemplary configuration of the connected device 400. The connected device 400 includes, for example, a processor 402, a communication unit 404, a sensor 406, and a location information acquisition unit 408.

The processor 402 processes signals from each component of the connected device 400. For example, the processor 402 encodes information transmitted from the communication unit 404. In addition, the processor 402 processes information obtained from the sensor 406.

The sensor 406 detects behavior of the connected device 400. For example, the sensor 406 includes an acceleration sensor, a gyroscope sensor, a barometer, a geomagnetic sensor, and the like. The acceleration sensor detects an acceleration level with respect to the connected device 400. The gyroscope sensor detects an angular acceleration level and an angular speed with respect to the connected device 400. The air pressure sensor detects the air pressure, and the height of the connected device 400 is calculated on the basis of the detected air pressure. The geomagnetic sensor detects geomagnetism, and the orientation of the connected device 400 is calculated on the basis of the detected geomagnetism.

The location information acquisition unit 408 obtains the location of the connected device 400. The location information acquisition unit 408 may obtain the location of the connected device 400 using, for example, a global navigation satellite system (GNSS). Further, the location information acquisition unit 408 may obtain the location of the connected device 400 on the basis of information from a base station of a cellular communication network.

Note that the connected device 400 transmits the obtained evaluation information to the learning detection apparatus 100 in the example described above. However, the connected device 400 may register the evaluation information in the blockchain. Then, the server 300 may obtain the evaluation information from the blockchain. At this time, the processor 402 of the connected device 400 may include a registration unit that registers the evaluation information in the blockchain.

<5. Hardware Configuration of Each Device>

The foregoing has described the learning management system and the method for processing information executed in the learning management system according to the present embodiment. Hereinafter, a hardware configuration of each device of the learning management system will be described.

(5-1. Hardware Configuration of Learning Detection Apparatus 100)

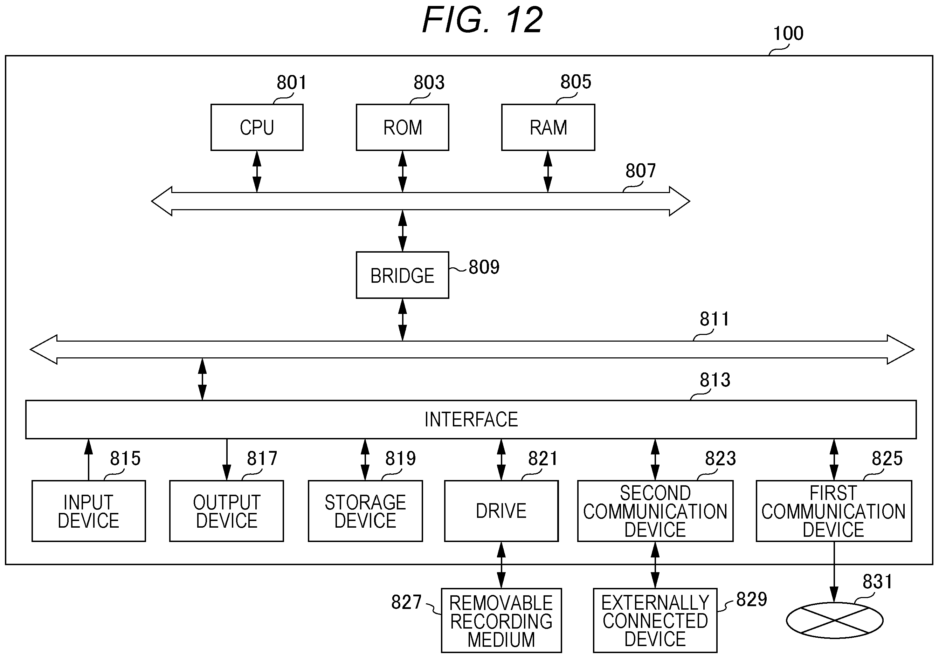

Hereinafter, a hardware configuration of the learning detection apparatus 100 according to the embodiment of the present disclosure will be described in detail with reference to Fig. 12. Fig. 12 is a block diagram for illustrating the hardware configuration of the learning detection apparatus 100 (e.g., laptop computer) according to the embodiment of the present disclosure.

The learning detection apparatus 100 mainly includes a CPU 801, a ROM 803, and a RAM 805. Furthermore, the learning detection apparatus 100 further includes a host bus 807, a bridge 809, an external bus 811, an interface 813, an input device 815, an output device 817, a storage device 819, a drive 821, a second communication device 823, and a first communication device 825.

The CPU 801 functions as a main processing unit and a control unit, and controls overall operation in the learning detection apparatus 100 or a part thereof in accordance with various programs recorded in the ROM 803, the RAM 805, the storage device 819, or a removable recording medium 827. Note that the CPU 801 may have the function of the processor 102. The ROM 803 stores programs to be used by the CPU 801, operation parameters, and the like. The RAM 805 primarily stores programs to be used by the CPU 801, parameters that appropriately change in the execution of the programs, and the like. These are mutually connected by the host bus 807 including an internal bus such as a CPU bus.

The host bus 807 is connected to the external bus 811, such as a peripheral component interconnect/interface (PCI) bus, via the bridge 809.

The input device 815 is an operation means operated by the user, such as an electrostatic or a pressure-sensitive touch panel, button, switch, and jog dial, for example. Moreover, the input device 815 includes, for example, an input control circuit or the like that generates input signals on the basis of information input by the user using the operation means mentioned above and outputs the signals to the CPU 801. The user can input various kinds of data or provide an instruction for processing operation to the learning detection apparatus 100 by operating the input device 815. Note that the input device 815 may have the function of the operation unit 108.

The output device 817 includes a device capable of visually or aurally notifying the user of the obtained information. Examples of such a device include a display device such as a liquid crystal display device, an EL display device, and a lamp, an audio output device such as a speaker and a headphone, and the like. The output device 817 outputs, for example, results obtained through various kinds of processing performed by the learning detection apparatus 100.

specifically, the display device displays the results obtained through various kinds of processing performed by the learning detection apparatus 100 as text or images. Meanwhile, the audio output device converts audio signals including reproduced audio data, sound data, and the like into analog signals, and outputs them. Note that the display device of the output device 817 may have the function of the display 110.

The storage device 819 is a device for storing data used in the learning detection apparatus 100. The storage device 819 includes, for example, a magnetic storage device such as a hard disk drive (HDD), a semiconductor storage device, an optical storage device, a magneto-optical storage device, or the like. The storage device 819 stores programs to be executed by the CPU 801, various kinds of data, various kinds of data obtained from the outside, and the like.

The drive 821 is a reader/writer for a recording medium, which is incorporated in or externally attached to the learning detection apparatus 100. The drive 821 reads out information recorded in the attached removable recording medium 827, such as a magnetic disk, an optical disk, a magneto-optical disk, and a semiconductor memory, and outputs the information to the RAM 805. Furthermore, the drive 821 is also capable of writing a record in the attached removable recording medium 827, such as a magnetic disk, an optical disk, a magneto-optical disk, and a semiconductor memory. The removable recording medium 827 is, for example, a DVD medium, an HD-DVD medium, a Blu-ray (registered trademark) medium, or the like. Furthermore, the removable recording medium 827 may be a CompactFlash (CF) (registered trademark), a flash memory, a secure digital (SD) memory card, or the like. Furthermore, the removable recording medium 827 may be, for example, an integrated circuit (IC) card mounting a contactless IC chip, an electronic device, or the like.

The second communication device 823 is used to exchange data with an externally connected device on the basis of communication being established with an externally connected device 829. Examples of the second communication device 823 include an IEEE802.11 port, an IEEE802.15 port, and the like. By being connected to the externally connected device 829 using the second communication device, the learning detection apparatus 100 directly obtains various kinds of data from the externally connected device 829, and transmits various kinds of data to the externally connected device 829.

The first communication device 825 is, for example, a communication interface including a communication device or the like for connecting to a communication network 831. The first communication device 825 is, for example, a communication card for wireless USB (WUSB), a wired or wireless local area network (LAN), or the like. Furthermore, the first communication device 825 may be a router for optical communication, a router for asymmetric digital subscriber line (ADSL), a modem for various kinds of communication, or the like. For example, the first communication device 825 is capable of transmitting and receiving signals or the like in accordance with a predetermined protocol, such as TCP/IP, for example, with the Internet or another communication device. Furthermore, the communication network 831 to be connected to the first communication device 825 includes a network connected by wire or wirelessly, or the like, which may be, for example, the Internet, a home LAN, infrared communication, radio wave communication, satellite communication, or the like.

(5-2. Hardware Configuration of Server 300)

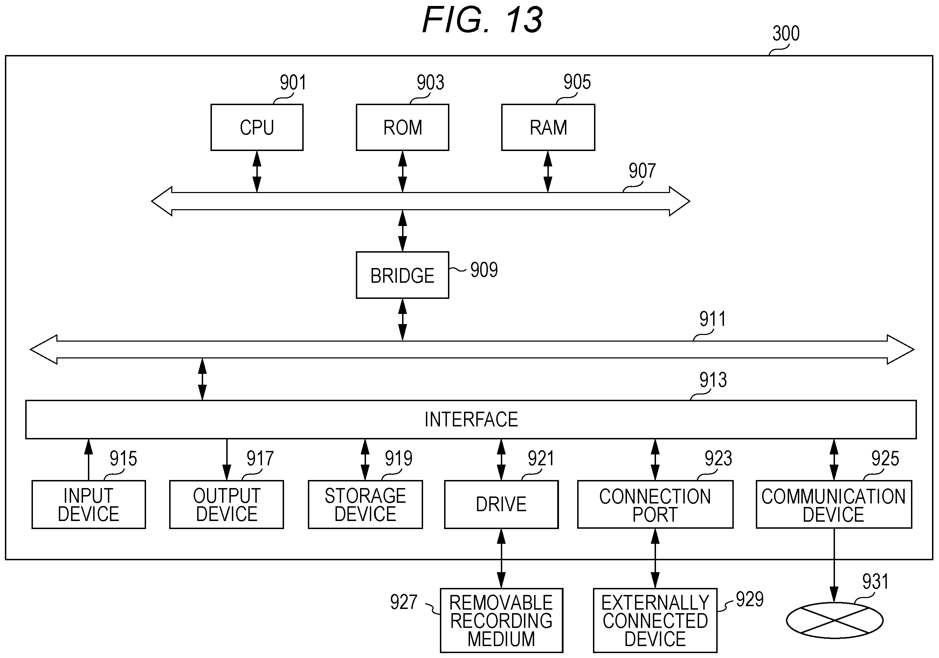

Hereinafter, a hardware configuration of the server 300 according to the embodiment of the present disclosure will be described in detail with reference to Fig. 13. Fig. 13 is a block diagram for illustrating the hardware configuration of the server 300 according to the embodiment of the present disclosure.

The server 300 mainly includes a CPU 901, a ROM 903, and a RAM 905. Furthermore, the server 300 further includes a host bus 907, a bridge 909, an external bus 911, an interface 913, an input device 915, an output device 917, a storage device 919, a drive 921, a connection port 923, and a communication device 925.

The CPU 901 functions as a main processing unit and a control unit, and controls overall operation in the server 300 or a part thereof in accordance with various programs recorded in the ROM 903, the RAM 905, the storage device 919, or a removable recording medium 927. Note that the CPU 901 may have the function of the processor 302. Furthermore, the CPU 901 may configure each of the analyzer 308, the certification unit 310, and the registration unit 312. The ROM 903 stores programs to be used by the CPU 901, operation parameters, and the like. The RAM 905 primarily stores programs to be used by the CPU 901, parameters that appropriately change in the execution of the programs, and the like. These are mutually connected by the host bus 907 including an internal bus such as a CPU bus.

The input device 915 is an operation means operated by the user, such as a mouse, a keyboard, a touch panel, a button, a switch, and a lever, for example. In addition, the input device 915 includes, for example, an input control circuit or the like that generates input signals on the basis of information input by the user using the operation means mentioned above, and outputs the signals to the CPU 901. The user can input various kinds of data or provide an instruction for processing operation to the server 300 by operating the input device 915.

The output device 917 includes a device capable of visually or aurally notifying the user of the obtained information. Examples of such a device include a display device, such as a CRT display device, a liquid crystal display device, a plasma display device, an EL display device, and a lamp, an audio output device, such as a speaker and a headphone, a printer, a mobile phone, a facsimile, and the like. The output device 917 outputs, for example, results obtained through various kinds of processing performed by the server 300. specifically, the display device displays the results obtained through various kinds of processing performed by the server 300 as text or images. Meanwhile, the audio output device converts audio signals including reproduced audio data, sound data, and the like into analog signals, and outputs them.

The storage device 919 is a device for storing data, which is an example of the storage 306 of the server 300. The storage device 919 includes, for example, a magnetic storage device such as a hard disk drive (HDD), a semiconductor storage device, an optical storage device, a magneto-optical storage device, or the like. The storage device 919 stores programs to be executed by the CPU 901, various kinds of data, various kinds of data obtained from the outside, and the like. Note that the storage device 919 may have the function of the storage 306.

The drive 921 is a reader/writer for a recording medium, which is incorporated in or externally attached to the server 300. The drive 921 reads out information recorded in the attached removable recording medium 927, such as a magnetic disk, an optical disk, a magneto-optical disk, and a semiconductor memory, and outputs the information to the RAM 905. Furthermore, the drive 921 is also capable of writing a record in the attached removable recording medium 927, such as a magnetic disk, an optical disk, a magneto-optical disk, and a semiconductor memory. The removable recording medium 927 is, for example, a DVD medium, an HD-DVD medium, a Blu-ray (registered trademark) medium, or the like. Furthermore, the removable recording medium 927 may be a CompactFlash (CF) (registered trademark), a flash memory, a secure digital (SD) memory card, or the like. Furthermore, the removable recording medium 927 may be, for example, an integrated circuit (IC) card mounting a contactless IC chip, an electronic device, or the like.

The connection port 923 is a port for directly connecting a device to the server 300. Examples of the connection port 923 include a universal serial bus (USB) port, an IEEE 1394 port, a small computer system interface (SCSI) port, and the like. Other examples of the connection port 923 include an RS-232C port, an optical audio terminal, a high-definition multimedia interface (HDMI) (registered trademark) port, and the like. By connecting an externally connected device 929 to the connection port 923, the server 300 directly obtains various kinds of data from the externally connected device 929, or provides various kinds of data to the externally connected device 929.

The communication device 925 is, for example, a communication interface including a communication device or the like for connecting to a communication network 931. The communication device 925 is, for example, a communication card for wireless USB (WUSB), a wired or wireless local area network (LAN), or the like. Furthermore, the communication device 925 may be a router for optical communication, a router for asymmetric digital subscriber line (ADSL), a modem for various kinds of communication, or the like. For example, the communication device 925 is capable of transmitting and receiving signals or the like in accordance with a predetermined protocol, such as TCP/IP, for example, with the Internet or another communication device. Furthermore, the communication network 931 to be connected to the communication device 925 includes a network connected by wire or wirelessly, or the like, which may be, for example, the Internet, a home LAN, infrared communication, radio wave communication, satellite communication, or the like.

<6. Supplementary Items>

As described above, although the preferred embodiments of the present disclosure have been described in detail with reference to the accompanying drawings, the technical scope of the present disclosure is not limited to such examples. It is apparent to those skilled in the art of the present disclosure that various alterations and modifications can be conceived within the scope of the technical idea described in the appended claims, and such alterations and modifications are also naturally within the technical scope of the present disclosure.

For example, the learning unit described above may include a learning unit related to exercise. For example, a learning event related to exercise may be detected on the basis of information associated with actions of the user (hereinafter also referred to as action data) obtained by a sensor (e.g., acceleration sensor and gyroscope sensor) included in the connected device 400, which is connected to the learning detection apparatus 100.

For example, the action data is information indicating that the user is walking, that the user is running, that an action related to specific exercise or competition is being performed, or the like. Specifically, the action related to specific exercise or competition includes actions that the user is swimming, the user is swinging a bat, the user is swinging a racket, the user is throwing a ball, and the like. Note that the action data may be obtained on the basis of comparison between a waveform detected by a sensor and a waveform such as acceleration statistically calculated when the user takes each action. Note that a method for processing information related to certification of the learning unit of the exercise described above is similar to the method for processing information described with reference to Fig. 8.

Note that a topic related to the learning unit of the exercise may include, for example, baseball, soccer, running, walking, and the like as categories of the topic related to the learning unit of the exercise. Furthermore, in a case where the category of the topic is baseball, sub-categories of the topic may include, for example, pitching, batting, fielding, base-running, and the like. In this manner, topics are classified into categories and sub-categories, whereby the learning is managed in more detail.

Furthermore, in the embodiment described above, certification of the shared learning unit is performed by the server 300. However, certification of the shared learning unit may be performed by the learning detection apparatus 100. That is, the learning detection apparatus 100 may have the functions of the analyzer 308 and the certification unit 310 of the server 300. Furthermore, the learning detection apparatus 100 may register information associated with the shared learning unit that has been certified in the blockchain. That is, the learning detection apparatus 100 may have the function of the registration unit 312 of the server 300.

Furthermore, in the example described above, the information associated with a learning unit is registered in the blockchain. However, the information associated with a learning unit may be registered in a system other than the blockchain. For example, the information associated with a learning unit may be managed by a server group constructing a cloud system. Furthermore, the information associated with a learning unit may be managed by an existing P2P network.

Furthermore, the information processing according to the present embodiment may be executed by an information processing apparatus such as a mobile phone, a tablet computer, a wearable device, a desktop computer, a PDA, and an in-vehicle device. In addition, the server 300 may not be connected to another device by wire, and may be a portable computer.

Furthermore, there may be provided a computer program that causes the processor 102 of the learning detection apparatus 100 and the processor 302 of the server 300 to operate as described above with reference to Fig. 8. Furthermore, a recording medium storing such a program may be provided.


<7. Conclusion>

As described above, in a learning information management system according to the present disclosure, propagation of knowledge from the educator to the learner is evaluated and managed. Furthermore, in the information management system according to the present embodiment, the information associated with a shared learning unit certified by education other than education provided by a predetermined institution, such as a school, is managed. With the information associated with a shared learning unit being managed in this manner, information associated with a wide range of education other than education provided by a predetermined institution, such as a school, is managed. Furthermore, in such informal education, information indicating what sort of education has been provided by what sort of educator is managed. Furthermore, with the information associated with a shared learning unit being registered in the blockchain, the information associated with a learning unit is held on the network without being tampered. Furthermore, a third party who wishes to use the information included in the blockchain can access the information included in the blockchain on the basis of predetermined authority.

Note that the following configurations are also within the technical scope of the present disclosure.

(1) An information processing apparatus, including: a processor that certifies a first learning unit of a learner on the basis of information indicating knowledge of an educator who educates the learner and a predetermined condition.

(2) The information processing apparatus according to (1) described above, in which the knowledge of the educator is expressed numerically, and
the predetermined condition is that a value of the information indicating the knowledge of the educator is larger than a first threshold value for determining possession of knowledge required to be qualified as an educator.

(3) The information processing apparatus according to (1) described above, in which the processor further certifies the first learning unit on the basis of information indicating knowledge of the learner.

(4) The information processing apparatus according to (3) described above, in which the knowledge of the educator and the knowledge of the learner are expressed numerically, and
the predetermined condition is that a difference between a value of the information indicating the knowledge of the educator and a value of the information indicating the knowledge of the learner is larger than a second threshold value.

(5) The information processing apparatus according to (3) described above, in which the knowledge of the learner is expressed numerically, and
the predetermined condition is that a value of the information indicating the knowledge of the learner is larger than a third threshold value for determining that the learner has knowledge for learning.

(6) The information processing apparatus according to any one of (1) to (5) described above, in which the predetermined condition is that learning performed by the learner has relevance to a registered topic.

(7) The information processing apparatus according to any one of (1) to (6) described above, in which the processor is configured to:

obtain, as information associated with the educator, information associated with a second learning unit different from the first learning unit; and
calculate the number of hops indicating the number of times of knowledge propagation from the educator having the second learning unit to the learner on the basis of the information associated with the second learning unit, and the predetermined condition is that the number of hops is within a predetermined number of times.

(8) The information processing apparatus according to (7) described above, in which the processor weights the number of hops on the basis of the number of people intervening between the educator having the second learning unit and the learner.

(9) The information processing apparatus according to (7) described above, in which the processor obtains information associated with a method of propagation of knowledge, and
the processor weights the number of hops on the basis of the method of propagation of knowledge.

(10) The information processing apparatus according to any one of (1) to (9) described above, in which the processor further certifies the first learning unit using evaluation information for evaluating learning of the learner.

(11) The information processing apparatus according to (10) described above, in which the processor obtains the evaluation information from a connected device that obtains the evaluation information.

(12) The information processing apparatus according to (11) described above, in which the evaluation information includes any one of information associated with action of the learner, biological information of the learner, and information associated with a usage status of the connected device.

(13) The information processing apparatus according to any one of (1) to (12) described above, in which the processor registers information associated with the first learning unit that has been certified in a P2P database.

(14) The information processing apparatus according to (13) described above, in which the P2P database is a blockchain.

(15) The information processing apparatus according to (13) described above, in which the information associated with the first learning unit includes any one of information associated with a learned topic, information associated with the educator, information associated with the learner, information associated with a learning time, and information associated with a learning method.

(16) A method for processing information that causes a computer to certify a first learning unit of a learner on the basis of information indicating knowledge of an educator who educates the learner and a predetermined condition.

REFERENCE SIGNS LIST

| | |
|---|---|
| 100 | Learning detection apparatus |
| 102 | Processor |
| 104 | First communication unit |
| 106 | Second communication unit |
| 108 | Operation unit |
| 110 | Display |
| 112 | Storage |
| 114 | Microphone |
| 200 | Network |
| 300 | Server |
| 302 | Processor |
| 304 | Communication unit |
| 306 | Storage |
| 308 | Analyzer |
| 310 | Certification unit |
| 312 | Registration unit |
| 400 | Connected device |
| 402 | Processor |
| 404 | Communication unit |
| 406 | Sensor |
| 408 | Location information acquisition unit |

**Claims**

1. An information processing apparatus, comprising:
a processor that certifies a first learning unit of a learner on a basis of information indicating knowledge of an educator who educates the learner and a predetermined condition.

2. The information processing apparatus according to claim 1, wherein

the knowledge of the educator is expressed numerically, and

the predetermined condition is that a value of the information indicating the knowledge of the educator is larger than a first threshold value for determining possession of knowledge required to be qualified as an educator.

3. The information processing apparatus according to claim 1, wherein
the processor further certifies the first learning unit on a basis of information indicating knowledge of the learner.

4. The information processing apparatus according to claim 3, wherein
the knowledge of the educator and the knowledge of the learner are expressed numerically, and
the predetermined condition is that a difference between a value of the information indicating the knowledge of the educator and a value of the information indicating the knowledge of the learner is larger than a second threshold value.

5. The information processing apparatus according to claim 3, wherein
the knowledge of the learner is expressed numerically, and
the predetermined condition is that a value of the information indicating the knowledge of the learner is larger than a third threshold value for determining that the learner has knowledge for learning.

6. The information processing apparatus according to claim 1, wherein
the predetermined condition is that learning performed by the learner has relevance to a registered topic.

7. The information processing apparatus according to claim 1, wherein
the processor is configured to:

   obtain, as information associated with the educator, information associated with a second learning unit different from the first learning unit; and
   calculate a number of hops indicating a number of times of knowledge propagation from the educator having the second learning unit to the learner on a basis of the information associated with the second learning unit, and the predetermined condition is that the number of hops is within a predetermined number of times.

8. The information processing apparatus according to claim 7, wherein
the processor weights the number of hops on a basis of a number of people intervening between the educator having the second learning unit and the learner.

9. The information processing apparatus according to claim 7, wherein
the processor obtains information associated with a method of propagation of knowledge, and
the processor weights the number of hops on a basis of the method of propagation of knowledge.

10. The information processing apparatus according to claim 1, wherein
the processor further certifies the first learning unit using evaluation information for evaluating learning of the learner.

11. The information processing apparatus according to claim 10, wherein
the processor obtains the evaluation information from a connected device that obtains the evaluation information.

12. The information processing apparatus according to claim 11, wherein
the evaluation information includes any one of information associated with action of the learner, biological information of the learner, and information associated with a usage status of the connected device.

13. The information processing apparatus according to claim 1, wherein
the processor registers information associated with the first learning unit that has been certified in a P2P database.

14. The information processing apparatus according to claim 13, wherein
the P2P database is a blockchain.

15. The information processing apparatus according to claim 13, wherein
the information associated with the first learning unit includes any one of information associated with a learned topic, information associated with the educator, information associated with the learner, information associated with a learning time, and information associated with a learning method.

16. A method for processing information that causes a computer to perform:
    certifying a first learning unit of a learner on a basis of information indicating knowledge of an educator who educates the learner and a predetermined condition.

*FIG.1*

# FIG. 2

# FIG. 3

FIG. 4

FIG. 5

# FIG. 6

100

LEARNING DETECTION APPARATUS

104

FIRST COMMUNICATION UNIT

106

SECOND COMMUNICATION UNIT

108

OPERATION UNIT

110

DISPLAY

112

STORAGE

114

MICROPHONE

102

PROCESSOR

# FIG. 7

SERVER — 300

PROCESSOR — 302

COMMUNICATION UNIT — 304

STORAGE — 306

ANALYZER — 308

CERTIFICATION UNIT — 310

REGISTRATION UNIT — 312

# FIG. 8

```
        START
          │
          ▼
┌──────────────────────────┐
│  REGISTER LEARNING EVENT │─── S102
└──────────────────────────┘
          │
          ▼
┌──────────────────────────┐
│ OBTAIN INFORMATION       │
│ ASSOCIATED               │─── S104
│ WITH LEARNING EVENT      │
│ AND LEARNING INFORMATION │
└──────────────────────────┘
          │
          ▼
┌──────────────────────────┐
│ TRANSMIT INFORMATION     │
│ ASSOCIATED               │─── S106
│ WITH LEARNING EVENT      │
│ AND LEARNING INFORMATION │
└──────────────────────────┘
          │
          ▼
┌──────────────────────────┐
│ ANALYZE LEARNING         │─── S108
│ INFORMATION              │
└──────────────────────────┘
          │
          ▼
         S110
      ╱──────────╲
     ╱IS PREDETER-╲    NO
    ╱ MINED        ╲──────────┐
    ╲ CONDITION    ╱          │
     ╲SATISFIED?  ╱           │
      ╲──────────╱            │
          │ YES               │
          ▼                   │
┌──────────────────────────┐  │
│ CERTIFY SHARED           │─── S112
│ LEARNING UNIT            │  │
└──────────────────────────┘  │
          │                   │
          ▼                   │
┌──────────────────────────┐  │
│ REGISTER INFORMATION     │  │
│ ASSOCIATED WITH          │─── S114
│ SHARED LEARNING UNIT     │  │
└──────────────────────────┘  │
          │                   │
          ▼                   │
         END                  │
```

# FIG. 9

| | | |
|---|---|---|
| TOPIC<br>(CATEGORY) | | ENGLISH |
| TOPIC<br>(SUB-CATEGORY) | | PASSIVE |
| INFORMATION ASSOCIATED WITH LEARNER | USER ID | abc1234 |
| | OBTAINED SHARED LEARNING KNOWLEDGE | 50 |
| | GENERAL LEARNING KNOWLEDGE AFTER LEARNING | 80 |
| INFORMATION ASSOCIATED WITH EDUCATOR | EDUCATOR ID | def5678 |
| | TYPE OF HOLDING LEARNING UNIT | OFFICIAL LEARNING UNIT |
| | OBTAINED SHARED LEARNING KNOWLEDGE | 30 |
| | GENERAL LEARNING KNOWLEDGE AFTER LEARNING | 230 |
| LEARNING TIME | | 10 HOURS |
| LEARNING METHOD | | ONE-TO-ONE TUTORING |

FIG. 10

EP 3 605 444 A1

# FIG. 11

# FIG. 12

## FIG. 13

300

CPU 901   ROM 903   RAM 905

907

BRIDGE 909

911

INTERFACE 913

INPUT DEVICE 915   OUTPUT DEVICE 917   STORAGE DEVICE 919   DRIVE 921   CONNECTION PORT 923   COMMUNICATION DEVICE 925

REMOVABLE RECORDING MEDIUM 927   EXTERNALLY CONNECTED DEVICE 929   931

EP 3 605 444 A1

<table>
<tr><td colspan="2" align="center">**INTERNATIONAL SEARCH REPORT**</td><td>International application No.<br>PCT/JP2018/001292</td></tr>
</table>

**A. CLASSIFICATION OF SUBJECT MATTER**
Int. Cl. G06Q50/20(2012.01)i

According to International Patent Classification (IPC) or to both national classification and IPC

**B. FIELDS SEARCHED**

Minimum documentation searched (classification system followed by classification symbols)
Int. Cl. G06Q50/20

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2013-501260 A (SIEMENS HEALTHCARE DIAGNOSTICS INC.) 10 January 2013, paragraphs [0002], [0007], [0016]-[0092], fig. 1-9 & US 2012/0190002 A1, paragraphs [0002], [0007], [0056]-[0131], fig. 1-9 & WO 2011/017608 A1 & EP 2462575 A1 & CN 102473357 A | 1, 3, 6, 16<br>2, 10-15<br>4-5, 7-9 |
| Y | JP 2004-517379 A (HOMEWORK911.COM, INC.) 10 June 2004, paragraph [0019] & US 2002/0013836 A1, paragraph [0020] & WO 2002/007128 A2 & EP 1301915 A2 & KR 10-2003-0070884 A & CN 101084534 A & AU 7894001 A & CA 2418330 A | 2 |
| Y | JP 2013-242434 A (SONY CORP.) 05 December 2013, paragraphs [0013]-[0128], fig. 1-21 (Family: none) | 10-12 |

☒ Further documents are listed in the continuation of Box C.      ☐ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>12.04.2018 | Date of mailing of the international search report<br>24.04.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/001292

C (Continuation). DOCUMENTS CONSIDERED TO BE RELEVANT

| Category* | Citation of document, with indication, where appropriate, of the relevant passages | Relevant to claim No. |
|---|---|---|
| Y | 堀真寿美, ブロックチェーンを利用した非集中型学習プラットフォーム CHiLO の開発, 情報処理学会インターネットと運用技術シンポジウム 2016, 02 December 2016, p. 73 (HORI , Masumi et al. CHiLO: Decentralized Learning Platform using Blockchain. IPSJ Internet and Operation Technology Symposium 2016, 02 December 2016, p. 73) | 13-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020013836 A